# EUROPÄISCHE PATENTSCHRIFT

(11) **EP 0 769 539 B1**
(45) Veröffentlichungstag und Bekanntmachung des Hinweises auf die Patenterteilung: **27.01.1999**
(21) Anmeldenummer: 96115212.1
(22) Anmeldetag: 23.09.1996
(51) Int. Cl.: C09D 123/02, C09D 151/06

(54) **Beschichtungsmaterial auf Basis nichtwässriger Polyolefin-Dispersionen und ein Verfahren zu dessen Herstellung**
Non-aqueuous polyolefin dispersion coating composition and process for its preparation
Composition pour revêtement à base d'une dispersion de polyoléfine non aqueux et procédé pour sa préparation

(30) Priorität: 29.09.1995 DE 19537527
(43) Veröffentlichungstag der Anmeldung: 23.04.1997
(73) Patentinhaber: Marinow, Slaweyko, Prof., Dr., 06120 Halle (DE)
(72) Erfinder: Marinow, Slaweyko, Prof. Dr., 06120 Halle (DE); Franzke, Michael, Dr., 06217 Merseburg (DE)
(74) Vertreter: Schinke, Herbert, Dr. Dr., Patentanwaltskanzlei

(56) Entgegenhaltungen:
- DE-A- 2 352 774
- DE-A- 2 806 726
- DE-A- 3 140 070
- FR-A- 1 451 734

## Beschreibung

Die Erfindung betrifft ein Beschichtungsmaterial auf Basis von Polyolefinen, welches aus einer nichtwäßrigen feinteiligen Dispersion eines Polyolefins in einer teilweise modifizierten Kunstharzmatrix besteht und insbesondere als Alternative zu PVC-Plastisolen für den Einsatz als Unterbodenschutz im Automobilsektor geeignet ist sowie ein Verfahren zur Herstellung dieser Beschichtungsmaterialien.
Als Unterbodenschutz- und Dichtungsmaterialien im Automobilbau finden derzeit hauptsächlich PVC-Plastisole Verwendung. Sie zeichnen sich durch gute Verarbeitbarkeit und die daraus hergestellten Überzüge durch ausgezeichnete Eigenschaften aus (Elastizität, Festigkeit, Tieftemperaturbeständigkeit, Verschleißfestigkeit, sie sind kostengünstig und an sich ökologisch unbedenklich, da keine flüchtigen Bestandteile enthalten sind). Es ist jedoch bekannt, daß PVC-Beschichtungen bei der üblichen thermischen Entsorgung der PKW-Karossen durch Schrottaufschmelzen die Entstehung von Chlorwasserstoffgasen (HCl) und polychlorierten Dibenzofuranen und -dioxinen verursachen, was zu erheblichen Umweltproblemen führt.
Es wurden bereits verschiedene andere Unterbodenschutzmaterialien, die ohne Verwendung von PVC-Plastisolen auskommen, vorgeschlagen, allerdings konnten sich diese aus den verschiedensten Gründen nicht durchsetzen. Erwähnt werden sollen:
- Beschichtungsmaterialien auf Basis von Elastdispersionen aus Butadien mit Acrylnitril, Styrol bzw. mit beiden, welche funktionelle Gruppen enthalten,
- Dispersionen aus Bitumen mit Kunstharzen oder Natur- oder Kunstkautschuk und mineralischen Füllstoffen,
- Polymerdispersionen auf Acrylatbasis und auf Vinylesterbasis,
- Dispersionen aus Methylmethacrylat- bzw. Acrylnitrilharzen mit einem Acrylat-, Dien- und/oder einem Styrol-Elastomer.

Die Verwendung von Dispersionen auf Basis von Polyolefinen für eine derartige Anwendung ist nicht bekannt, obwohl Polyolefine, insbesondere Polyethylen, als Beschichtungsmaterial breite Anwendung finden. Polyethylenbeschichtungen zeichnen sich durch sehr gute Chemikalien- und Feuchtigkeitsbeständigkeit, hohe Elastizität und Korrosionsfestigkeit aus. Sie werden im Walzenauftrag, über den Schmelzefilm aus der Extruder-Breitschlitzdüse, durch Flammspritzen, elektrostatisches Aufsprühen oder Wirbelsintern aufgebracht. Mit Ausnahme des Walzen- und des Extrusionsbeschichtens handelt es sich dabei um spezielle Anwendungsgebiete. Man hat bereits früh versucht, vor allem Polyethylen auch als Dispersion zu verarbeiten, da diese den Anwendungsbereich von Polyethylen-Beschichtungen beträchtlich ausweiten. Dispersionsbeschichtungen sind nicht auf vollflächiges Auftragen beschränkt, eigenen sich sehr gut für unregelmäßig geformte Oberflächen sowie für spezielle Aufträge. Zur Herstellung von Polyethylen-Dispersionen sind vor allem in der Patentliteratur zahlreiche Vorschläge gemacht worden. So wird in der EP 0 246 729 die Herstellung einer wäßrigen Dispersion aus einem hydrophoben Polymer, d. h. aus einem Polyolefin oder daraus abgeleitetem Copolymeren, und einem wasserunlöslichen thermoplastischem Olefin-Copolymeren, das Carboxylatgruppen enthält (0,1...5 meq -COO-/g), beschrieben. In Verbindung mit anionischen oder nichtionischen oberflächenaktiven Agenzien, organischen Lösungsmitteln und Wasser werden feste Polyolefin-Dispersionen erhalten, die durch zusätzliche Zugabe von Wasser in fließfähige Dispersionen umgewandelt werden können. Deren Eignung als Materialüberzug wird genannt, allerdings fehlen Aussagen über Schichtdicken, Trocknungsbedingungen und die Qualität der Beschichtungen.
Zur Vergütung von Glasoberflächen sind ebenfalls wäßrige Dispersionen aus anoxidiertem Polyethylen mit Aminoxiden und Carboxylaten quarternärer hydroxylterminierter Alkylamine (DE-PS 36 24 546) bzw. mit Ammoniumcarboxylaten von betainartiger Struktur modifizierten Polyethylenwachsen (DE-PS 36 29 149) vorgeschlagen worden.
Nach der DE-OS 39 26 005 werden wäßrige Dispersionen aus PE-Wachsen und Organopolysiloxanen mit stickstoffhaltigen Gruppen (Amido- und Amingruppen) zur Beschichtung von Fasermaterialien eingesetzt.
Mittelviskose, wäßrige Dispersionspasten aus Polyethylen, die als Papierbeschichtung einsetzbar sind, werden mit Hilfe eines Suspendiermittels aus einem Reaktionsprodukt von Fettalkoholen mit Ethylenoxid in Kombination mit wasserlöslichen, nichtionogenen Polymeren mit Verdickerwirkung erhalten (DE-PS 37 40 155).
Derartige Dispersionen weisen den Nachteil auf, daß sie eine relativ geringen Feststoffgehalt (in der Regel 10 bis 40 %) aufweisen und sich somit nur für dünne lackartige Beschichtungen (Schichtdicke 50- 500µm) eignen. Bei der Verwendung als Dichtungsmassen und für dickere Überzüge besteht aufgrund des hohen Anteils an flüchtigen Bestandteilen die Gefahr der Bildung von Blasen, Spannungsrissen u.s.w. Desweiteren ist die Verwendung wäßriger Dispersionen wegen der damit verbundenen Korrosionsgefahr vor allem bei der Beschichtung von Metallen ungeeignet. Die insbesondere an einen Unterbodenschutz von Automobilen gestellten Anforderungen (Haftfestigkeit, Abrieb- und Kältebeständigkeit) sind vor allem bei Verwendung von Polyethylenwachsen nicht erfüllt. Es ist weiterhin bekannt, daß die Haftung der Polyethylenfilme entscheidend von der Anfschmelztemperatur abhängt. Festhaftende Überzüge sind nur bei Temperaturen zwischen 200 °C und 230 °C erhältlich, der Vorgang ist somit durch einen recht hohen Energiebedarf gekennzeichnet.
In der DE-OS 43 31 667 wird die Herstellung eine Beschichtungsmaterials auf Polyolefin-Basis beschrieben, nach der Polyolefin-Pulver unter Durchsetzung eines Plasmagases, wie z. B. Argon, Sauerstoff, Stickstoff, Ethylen, Vinylacetat, Acrylamide, Acrylnitril mittels Hochfrequenz- oder Mittelwellenanregung funktionalisiert werden. Durch Dispergierung solcherart behandelter Polyolefin-Pulver in nichtsiedenden Weichmachern sollen Plastisole erhältlich sein, die als Beschichtungsmaterialien geeignet sind. Es werden jedoch keine Angaben über den erreichbaren Grad der Funktionalisierung gemacht. Es erscheint fraglich, ob allein durch eine Plasmabehandlung, die ausschließlich eine Modifizierung der Oberfläche bewirkt, das Polyolefin ausreichend funktionalisiert und dessen Verträglichkeit mit dem Weichmacher soweit erhöht werden kann, daß einerseits die Bildung stabiler Polyolefin-Plastisole möglich wird und andererseits der Weichmacher während des Gelierprozesses fest in die Überzugsschicht, d. h. ohne Phasentrennung und Ausbluten des Weichmachers, eingebaut wird.

Der Erfindung liegt daher die Aufgabe zugrunde, ein Beschichtungsmaterial auf Basis nichtwäßriger pastenartiger Polyolefin-Dispersionen und ein Verfahren für deren Herstellung zu entwickeln. Dieses Beschichtungsmaterial soll einen hohen Feststoffgehalt und falls erforderlich nur sehr geringe Mengen flüchtiger organischer Lösungsmittel enthalten und durch Streichen, Spachteln, Tauchen oder Rollen zu Überzügen mit Schichtdicken bis ca. 2 mm aufgebracht werden können, welche bereits bei Temperaturen unter 200 °C zu einer festhaftenden und abriebbeständigen Überzugsschicht ohne wesentliche Änderung der Auftragsdicke gelieren.
Erfindungsgemäß wird die Aufgabe dadurch gelöst, daß nach einem in den weiteren Ausführungen näher beschriebenen Verfahren ein Polyolefin a) in einem fettsäuremodifizierten Polyesterharz b) unter Verwendung eines nichtflüchtigen, flüssigen Weichmachers c) dispergiert wird. Die so erhaltene feindisperse Zusammensetzung ist durch Zusatz eines Fremdharzes in Form von Epoxidharzen d) bei Temperaturen zwischen 140 und 200 °C härtbar und können erfindungsgemäß als Beschichtungsmaterial eingesetzt werden. Die Eigenschaften der Dispersion und der resultierenden Beschichtungen können in weitem Rahmen dadurch variiert werden, daß der Dispersion gegebenfalls Härtungsbeschleuniger, Reaktivverdünner und geringe Mengen an Lösungsmitteln (vorzugsweise physiologisch unbedenkliche) sowie die üblichen Hilfs- und Zusatzstoffe zugesetzt werden.

Hauptkomponente der erfindungsgemäßen Beschichtungsmaterialien ist ein Polyolefin, wobei Polyethylen und Polypropylen bevorzugt werden. Es können alle bekannten Polyethylen- und Polypropylen-Typen Verwendung finden, soweit sie in der Schmelze verarbeitbar sind Geeignet sind darüber hinaus auch Copolymere des Ethylens oder Propylens mit einem oder mehreren ungesättigten, polymerisierbaren Monomeren. Geeignete Comonomere für Olefin-Copolymere sind mit Ethylen oder Propylen copolymerisierbare ungesättigte Verbindungen, z. B. Olefine, Acrylsäure und Methacrylsäure sowie deren Derivate, olefinisch ungesättigte Dicarbonsäuren und deren Derivate, Vinylester und -ether. Beispiele sind Copolymere aus Ethylen bzw. Propylen und höheren α-Olefinen von C₃ bis C₈ bzw. deren Isomeren, z. B. lineares Polyethylen niederer und mittlerer Dichte und hoher Dichte (PE-LLD bzw. PE-MD bzw. PE-HD), Vinylacetat, Vinylalkohol, Maleinsäureanhydrid, Methyl- oder Ethylacrylat Der Anteil der Comonomeren liegt zwischen 1 und 50 Mol-%, vorzugsweise zwischen 2 und 15 Mol-%, und wird so bemessen, daß der Schmelzpunkt des Olefin-Copolymeren zwischen 60 und 160 °C, vorzugsweise zwischen 80 und 140 °C liegt Desweiteren können auch Polyolefine, die mit Hilfe von polaren und/oder reaktiven Gruppen wie Säuren und Ester nachträglich modifiziert wurden, zur Anwendung kommen. Ein Weg, zu solchen modifizierten Polyolefinen zu gelangen, besteht darin, das Polyolefin in der Schmelze in Gegenwart von thermisch zerfallenden Initiatoren mit radikalisch polymerisierbaren Monomeren zu pfropfen. Als Pfropfmonomere sind u. a. geeignet: (Meth)acrylsäure, (Meth)acrylsäureester, Maleinsäureanhydrid, Itaconsäureanhydrid, Vinylacetat, Triethoxyvinylsilan u. a.

Als Dispergiermittel für die feinteilige Dispergierung der unter a) genannten Olefin-Polymeren werden erfindungsgemäß Polyesterharze vom Alkydtyp b) eingesetzt. Es handelt sich hierbei um nichttrocknende, überwiegend mit synthetischen gesättigten Fettsäuren modifizierte Alkydharze mit einem Fettsäure-Gehalt von 5 bis 60 Gew.%, vorzugsweise von 15 bis 55 Gew.% (berechnet als Triglycerid). Das Harz b) ist in der Dispersion in einer Menge von 5 bis 100 Gew.%, vorzugsweise 10 bis 70 Gew.%, bezogen auf das Polyolefin a), enthalten. Die Fettsäurekomponente besteht, bezogen auf die Gesamtfettsäuremenge des Alkydharzes b), zu 70 bis 100 Gew.%, insbesondere zu 80 bis 100 Gew.%, aus unverzweigten, gesättigten C12- bis C18-Fettsäuren. Die Fettsäuren können allein oder in Kombination von zwei oder mehreren Fettsäuren verwendet werden. Es wurde gefunden, daß eine gute Dispergierbarkeit der unter a) genannten Polymeren in dem Alkydharz und eine homogene Beschichtung erreicht wird, wenn die Fettsäurekomponente mindestens 10 Gew.%, vorzugsweise 40 bis 80 Gew.% (bezogen auf die Gesamtfettsäuremenge) C-18-Fettsäure (Stearinsäure) enthält. Die optimale Menge der C-18-Fettsäure richtet sich in erster Linie nach dem Gesamtfettsäuregehalt des Alkydharzes, es besteht hierin eine proportionale Abhängigkeit. Darüberhinaus können die Alkydharze zwecks Eigenschaftsmodifizierung (Viskosität, Härte, Flexibilisierung) bis zu 30 Gew.% andere als die oben genannten Monocarbonsäuren enthalten. Hier kommen z.B. geradkettige oder verzweigte Fettsäuren mit einer C-Zahl kleiner 12, aromatische Carbonsäuren wie Benzoesäure, Harzsäuren Kolophonium) oder auch ungesättigte natürliche Fettsäuren wie Ölsäure, Leinöl-, Kokos- oder Sojaöl-Fettsäure in Frage. Der alleinige Einsatz von natürlichen ungesättigten Fettsäuren ist nicht zweckmäßig, da erstens ein unter a) benanntes Polymere nicht nach dem nachfolgend beschriebenen Verfahren homogen dispergiert wird, zweitens sie während des Gelierprozesses zu einer unerwünschten Verfärbung und zum Ausbluten der eingesetzten Weichmacher c) führen und drittens die Oxidationsanfälligkeit des Polyolefins erhöhen. Eine Beteiligung der ungesättigten Fettsäuren am Vernetzungsprozeß durch oxidative Vernetzung der Doppelbindungen ist aufgrund des relativ hohen Diffusionswiderstandes von Polyethylen gegenüber Luftsauerstoff nicht möglich. Für die erfindungsgemäße Verwendung von Alkydharzen b) als Dispergierharz haben sich solche mit einer Säurezahl von 6 bis 50, insbesondere solche mit einer Säurezahl von 10 bis 40 als geeignet erwiesen. Niedrigere Säurezahlen schränken die Möglichkeiten einer nachfolgenden Vernetzung stark ein, höhere Säurezahlen führen wegen der zu starken Polarität des Harzes zu einer verminderten Dispergierfähigkeit der unter a) genannten Polymeren sowie zu einer inhomogenen Beschichtungsoberfläche mit deutlich erkennbarer Phasenseparation.
Die Herstellung der Alkydharze erfolgt im wesentlichen über eine Polykondensation nach den aus dem Stand der Technik bekannten Verfahren. Dies betrifft auch alle nach dem Stand der Technik bekannten Modifizierungsvarianten. Bevorzugt wird das sogenannte Einstufen-Verfahren, da bei diesem Verfahren ohne Katalysator gearbeitet und das Eigenschaftsspektrum sehr breit variiert werden kann. Die Ausgangskomponenten Polyol, Dicarbonsäure bzw. deren Anhydrid und Fettsäuren werden bei Temperaturen von 140 °C bis 260 °C gemeinsam bis zur gewünschten Säurezahl kondensiert. Die für die Polykondensation eingesetzten Polyole und Dicarbonsäuren unterliegen keinen speziellen Einschränkungen, es können prinzipiell alle aus der Alkydharz-Chemie bekannten Monomere verwendet werden. Typische häufig verwendete Verbindungen sind bei den Polyolen Glycerin, Pentaerythrit und 2,2-Bis-[hydroxymethyl]-1-butanol, bei den Dicarbonsäuren bzw. - anhydriden kommen vor allem Phthalsaure, Isophthalsäure, Hexahydrophthalsäure und deren Anhydride, Adipinsäure und Maleinsäureanhydrid in Betracht. Welche Verbindungen im konkreten Fall eingesetzt werden, bleibt für den Gegenstand der Erfindung von untergeordneter Bedeutung, wesentlich ist die Zusammensetzung der Fettsäurekomponente. Die Ausgangskonzentration von Polyol und Dicarbonsäure ist abhängig von den gewünschten Harzeigenschaften (Schmelzpunkt, Viskositat, Säure- und Hydroxylzahl). Bevorzugt wird ein in etwa äquimolares Verhältnis (bei Einsatz von dreiwertigen Alkoholen und Dicarbonsäuren), es kann jedoch ohne weiteres ein anderes Ausgangsmolverhältnis gewählt werden, solange die erfindungswesentlichen Merkmale der Dispersion und der Beschichtung nicht beeinträchtigt werden. Eine Änderung des Ausgangsmolverhältnisses kann insbesondere dann vorteilhaft sein, wenn eine weitergehende Modifizierung der Harze gewünscht wird oder dort, wo es erforderlich und möglich ist, eine teilweise Wasserdispergierbarkeit erreicht werden soll. Bei der Wahl des Konzentrationsverhältnisses muß jedoch beachtet werden, daß eine vollständige Veresterung der Monocarbonsäuren erfolgt.
Desweiteren können ebenso Alkydharze, die durch Copolymerisation von cyclischen Dicarbonsäureanhydriden mit Glycidylestern von synthetischen gesättigten Fettsäuren in Gegenwart von mehrwertigen Alkoholen oder Polycarbonsäuren und von basischen oder auch sauren Katalysatoren erhalten werden, eingesetzt werden. Hinsichtlich der erfindungswesentlichen Harzeigenschaften (Fettsäuregehalt, Säurezahl) gelten bei den copolymerisierten Alkydharzen die gleichen Festlegungen wie bei den polykondensierten Alkydharzen. Der Fettsäuregehalt kann durch die Mitpolymerisation von Glycidylestern anderer als die o. g. gesättigten C12- bis C18-Fettsäuren oder durch die Mitpolymerisation von Glycidylethern eingestellt werden.
Als Weichmacher c), die in Verbindung mit dem fettsäuremodifizierten Polyesterharz b) das eigentliche Dispersionsmedium darstellen, können in Mengen bis zu 75 Gew.%, bezogen auf die Komponente b), alle als solche bekannten Verbindungen eingesetzt werden, soweit sie mit dem verwendeten Polyesterharz b) verträglich sind. Hierfür sind insbesondere niedermolekulare Weichmacher auf Phthalatbasis geeignet, von diesen wiederum insbesondere solche, die unter den nachfolgend dargelegten Härtungsbedingungen Gelierfähigkeit aufweisen. Beispielhaft sollen Diethylphthalat, Di-n-butylphthalat und Dioctylphthalat genannt werden.
Die Dispersion enthält erfindungsgemäß ein weiteres härtbares Harz in Form von Epoxidverbindungen d) mit mindestens zwei Epoxidgruppen im Molekül als Vernetzerkomponente, wodurch das Beschichtungsmaterial bei erhöhter Temperatur ausgehärtet werden kann. Der Vorteil von Epoxidharzen liegt darin, daß während des Härtungsprozesses keine niedermolekularen und flüchtigen Bestandteile, die zu einer Qualitätsminderung der ausgehärteten Überzüge führen, abgespalten werden. Je nach Struktur der verwendeten Epoxidharze können sowohl die Produkt- als auch die Verarbeitungseigenschaften der Dispersionen sehr vielfältig modifiziert werden. Bei den Epoxidverbindungen, die erfindungsgemäß als weiteres härtbares Harz verwendet werden können, handelt es sich vorzugsweise um Polyglycidylether auf Basis von mehrwertigen, vorzugsweise zweiwertigen aliphatischen oder cycloaliphatischen Alkoholen, Phenolen oder Polyalkylenglycolen, die in Übereinstimmung mit der Zielstellung der Erfindung nicht halogensubstituiert sind. Als Beispiele sollen die Glycidylether von Bisphenol-A, Bisphenol-F, Bis-(4-hydroxycyclohexyl)-2,2-propan, Propylenglycol, Butylenglycol, Hexandiol, Polyoxyethylenglycol und Polyoxypropylenglycol genannt werden. Es können auch Polyglycidylester von Polycarbonsäuren, vorzugsweise von Dicarbonsäuren oder Addukte, die durch Anlagerung von H-aciden Verbindungen (Dicarbonsäuren, difunktionelle Phenole) an Diepoxide erhalten werden, eingesetzt werden. Demgegenüber sind aliphatische oder aromatische Glycidylamine oder Amin-Epoxid-Addukte für die erfindungsgemäße Anwendung der Dispersionen ungünstig, da von ihnen bereits bei Raumtemperatur eine beschleunigende Wirkung sowohl für die Reaktion der Epoxidgruppen mit den Carboxylgruppen aus Harz b) als auch für die Eigenpolymerisation des Epoxidharzes ausgeht, wodurch die Lagerfähigkeit drastisch eingeschränkt wird. Bevorzugt werden lösemittelfreie, niedrig- bis mittelviskose Epoxidharze mit einem Epoxidäquivalentgewicht von 160 bis 800, vorzugsweise von 180 bis 450. Sie können allein oder in Kombination eingesetzt werden. Ihre Auswahl erfolgt so, daß sie mit den Komponenten b) und c) verträglich sind. Der Anteil des Epoxidharzes bezogen auf die fertige Dispersion ist abhängig von der Säurezahl von Harz b) und vom Epoxidäquivalentgewicht des Epoxidharzes d). Vorzugsweise wird ein Äquivalentverhältnis von Epoxidgruppen zu Carboxylgruppen der Komponente b) von 1:0,9 bis 1,5:1, insbesondere von 1,05:1 bis 1,2:1 verwendet. Durch Zusatz von reaktiven Verdünnern, d. h. aromatischen oder aliphatischen, niedrigviskosen Epoxidverbindungen kann die Viskosität der Dispersion entsprechend der Applikationsmethode eingestellt werden. Der Gehalt kann bis zu 20 Gew.% betragen, vorzugsweise werden jedoch nur 5 bis 10 Gew.% zugesetzt. Zur weiteren Viskositätseinstellung können der fertigen Dispersion außerdem bis zu 20 Gew.% bezogen auf die Gesamtdispersion niedrigsiedende Lösungsmittel zugegeben werden, welche für a) Nichtlöser und für b) und d) Löser darstellen. Gegebenfalls können der Dispersion geringe Mengen, d. h. 0,01 bis 5 Gew.%, eines Härtungsbeschleunigers zugegeben werden, vorzugsweise erst unmittelbar vor der Anwendung, bei latent wirkenden Beschleunigern auch schon während des Herstellungsprozesses.

Die erfindungsgemäße Dispergierung der unter a) genannten Olefinpolymeren wird wenigstens 10°C oberhalb deren Schmelztemperatur durchgeführt. In einer geeigneten Mischeinrichtung (Kneter, Dissolver) wird zu einer vorgelegten Schmelze des Olefinpolymeren a) unter intensivem Mischen das Alkydharz b) portionsweise oder kontinuierlich zugegeben. Das Harz b) wird vorzugsweise lösemittelfrei hinzugefügt. Die Zugabe mittel- und hochviskoser Alkydharze kann über ein heizbares Dosiersystem bei solchen Temperaturen erfolgen, daß durch eine erniedrigte Viskosität eine problemlose Dosierung ermöglicht wird. Während dieses Homogenisierprozesses kann bereits ein Teil des flüssigen Weichmachers c), in der Regel 25 bis 50 Gew.%, bezogen auf die Gesamtweichmachermenge, zugegeben und homogen eingearbeitet werden. Ebenso können in dieser Verfahrensstufe erforderlichenfalls weitere Modifizierungsreaktionen an den Komponenten a) und/oder b), z. B. die o. g. Schmelzefunktionalisierung des Polyolefins a), erfolgen. Nachdem eine homogene Vermischung der Komponenten a), b) und gegebenfalls c) erreicht ist, wird kontinuierlich auf eine Temperatur, die zwischen Raumtemperatur und der unteren Grenze des Schmelzbereiches von a) liegt, gekühlt, wobei weiter vermischt wird. Im Kristallisationsbereich von a) wird bei konstanter Drehzahl ein plötzlicher Anstieg des Drehmomentes registriert. Es werden nun die weiteren Bestandteile der erfindungsgemäßen Dispersion, wie die Weichmachungsmittel c) bzw. deren verbleibender Teil, die Epoxidverbindungen d), gegebenenfalls Lösungsmittel zur Viskositätseinstellung und erforderlichenfalls weitere Hilfs- und Zusatzstoffe e) unter weiterem Mischen zugegeben und homogen eingearbeitet. Dieser Vorgang kann wiederum portionsweise oder kontinuierlich erfolgen, wobei die jeweiligen Komponenten einzeln oder, soweit sie untereinander mischbar sind, in Form eines Masterbatches erfolgen.
Das Resultat ist ein pastenartiges Beschichtungsmaterial, welches in einem Temperaturbereich von 140 bis 200 °C und bei einer Härtungsdauer von 30 bis 90 Minuten auch in größeren Schichtdicken (ca. 2 mm) zu glatten und ausgezeichnet haftenden Überzügen aushärtet. Enthält die Dispersion niedrigsiedende Lösungsmittel, muß zunächst eine Vortrocknung bei einer Temperatur erfolgen, bei der die Vernetzungsreaktion noch nicht in nennenswertem Umfang abläuft. In der Regel wird diese Vortrocknung bei einer Temperatur zwischen 40 und 60 °C, eventuell unter Vakuum, durchgeführt.

### Beispiel 1

### Herstellen einer nichtwäßrigen Dispersion

Von einem nach dem aus der Alkydharz-Synthese bekannten Schmelzkondensationsverfahren hergestellten fettsäuremodifizierten Polyesterharz b) mit einer Säurezahl von 32, das sich zusammensetzt aus 22 Gew.-% Glycerin, 5 Gew.-% Laurinsäure, 27,2 Gew.-% Stearinsäure und 45,8 Gew.-% Phthalsäureanhydrid, werden über einen Zeitraum von 5 Minuten 24,3 g zu einer Schmelze von 56,6 g eines LD-PE-Granulats in einer Brabender-Knetkammer gegeben und bei 130 °C homogen vermischt. Anschließend werden 7,9 g eines Weichmachers aus Phthalsäureester (z.B. Palatinol A) zudosiert und bis zum Erreichen einer homogenen Masse gemischt (10 Minuten). Nach Erreichen dieses Zustandes wird unter Weiterkneten auf 90 °C abgekühlt. Durch die Abkühlung bis unter den Schmelzpunkt des PE und der dabei erfolgenden mechanischen Einwirkung fällt das Polyethylen mit extrem kleiner Korngröße aus und wird in der Harz-Weichmacher-Mischung dispergiert. Bei 90 °C wird unter weiterer Abkühlung der restliche Weichmacher (8,4 g) eingearbeitet. Es wird eine weiche Masse von pastenartiger Konsistenz erhalten. Zu dieser Dispersion werden bei 45 °C nacheinander 3,8 g Epoxidharz mit dem Epoxidäquivalent ca. 180 (z.B. Beckopox EP 117) und 0,6 g Triethanolamin (Katalysator) zudosiert und homogen eingearbeitet. Als elastifiziernde Komponente werden weiterhin 1,8 g epoxidiertes Sojabohnenöl zugefügt. Die Dispersion kann mit 1-Methoxy-propanol-2 auf die gewünschte Viskosität eingestellt werden. Streichfähige Pasten werden bei einem Gehalt von ca. 10 % 1-Methoxypropanol-2 erreicht. Die Pasten wurden im Anschluß unter folgenden Bedingungen ausgehärtet: 15 min bei 45 °C und 60 min bei 150 °C.

### Beispiel 2

### Herstellen einer nichtwäßrigen Dispersion

Von einem nach dem aus der Alkydharz-Synthese bekannten Schmelzkondensationsverfahren hergestellten fettsäuremodifizierten Polyesterharz b) mit einer Säurezahl von 8, das sich zusammensetzt aus 24,7 Gew.-% Glycerin, 8,4 Gew.-% Laurinsäure, 22,9 Gew.-% Stearinsäure, 2,4 Gew.-% Benzoesäure und 41,6 Gew.-% Phthalsäureanhydrid, werden über einen Zeitraum von 10 Minuten 20,5 g zu einer Schmelze von 61,8 g eines Polyethylen-Vinylacetat-Copolymeren (VAC-Gehalt 9 Gew.-%) in einer Brabender-Knetkammer gegeben und bei 125 °C homogenisiert. Im Anschluß werden zur Erhöhung der Carboxylkonzentration 2,5 g Maleinsäureanhydrid in die Mischung eingearbeitet und nach weiteren 10 Minuten 6,0 g eines Weichmachers Dibutylphthalat zudosiert und bis zum Erreichen einer homogenen Masse gemischt. Nach Erreichen dieses Zustandes wird unter Weiterkneten kontinuierlich auf 70 °C abgekühlt. Durch die Abkühlung wird eine feinteilige Dispergierung des Ethylen-Vinylacetat-Copolymeren in der Harz-Weichmacher-Mischung erreicht. Bei dieser Temperatur wird unter weiterer Abkühlung der restliche Weichmacher (7,8 g) eingearbeitet. Es wird eine weiche Masse von pastenartiger Konsistenz erhalten, zu der bei 45 °C nacheinander 4,5 g Epoxidharz mit dem Epoxidäquivalent 190 (z.B. Beckopox EP 075), 0,8 g Epoxidharz mit dem Epoxidäquivalent ca. 340 (z.B. Beckopox EP 128) und 0,5 g Triethanolamin (Katalysator) zudosiert und homogen eingearbeitet werden. Diese Dispersion wird mit 1-Methoxy-propol-2 erreicht. Die Pasten wurden im Anschluß unter folgenden Bedingungen ausgehärtet: 20 min bei 45 °C und 50 min bei 180 °C.

## Patentansprüche

1. Beschichtungsmaterial auf Basis nichtwäßriger, pastenartiger Polyolefin-Dispersionen, dadurch gekennzeichnet, daß das Beschichtungsmaterial
a) ein feinteiliges Polyolefin,
b) ein fettsäuremodifiziertes Alkydharz mit einer Säurezahl von 6 bis 50 und einem Fettsäuregehalt von 5 bis 60 Gew.-%, wobei die Fettsäurekomponente zu 70 bis 100 Gew.-%, bezogen auf den Gesamtfettsäure-Gehalt, aus mindestens einer gesättigten C12- bis C18-Fettsäure und zu 0 bis 30 Gew.-% aus anderen Monocarbonsäuren als die genannten Fettsäuren besteht, als Dispergierharz,
c) nichtflüchtige, flüssige Weichmacher
d) härtbare Epoxidverbindungen mit mindestens zwei Epoxidgruppen im Molekül und einem Epoxidäquivalentgewicht von 160 bis 800 als Vernetzerkomponente und wobei das Äquivalentverhältnis der Epoxidgruppen aus d) zu den Carboxylgruppen aus b) in der Gesamtdispersion 0,9:1 bis 1,5:1 beträgt und
e) gegebenenfalls Härtungsbeschleuniger, Reaktivverdünner, Lösungsmittel und weitere Zusatz- und Hilfsstoffe
enthält.

2. Beschichtungsmaterial auf Basis nichtwäßriger, pastenartiger Polyolefin-Dispersionen nach Anspruch 1, dadurch gekennzeichnet, daß der Gehalt an Komponente b) 5 bis 100 Gew.-%, bezogen auf das Polyolefin a), und der Gehalt an Komponente c) bis zu 75 Gew.-%, bezogen auf die Komponente b), beträgt.

3. Beschichtungsmaterial auf Basis nichtwäßriger, pastenartiger Polyolefin-Dispersionen nach Anspruch 1 und/oder 2, dadurch gekennzeichnet, daß es sich bei dem Polyolefin a) um Polyethylen niederer Dichte (PE-LD), mittlerer Dichte (PE-MD) und hoher Dichte (PE-HD), um Polypropylen sowie um Copolymere des Ethylens und Propylens mit einem oder mehreren olefinisch ungesättigten, mit diesen Olefinen copolymerisierbaren Monomeren aus der Gruppe höhere α-Olefine (PE-LLD), Acrylsäure und Methacrylsäure sowie deren Derivate, olefinisch ungesättigte Dicarbonsäuren oder deren Derivaten, Vinylester oder -ether handelt.

4. Beschichtungsmaterial auf Basis nichtwäßriger, pastenartiger Polyolefin-Dispersionen nach einem oder mehreren der vorhergehenden Ansprüche, dadurch gekennzeichnet, daß ein Polyolefin a) eingesetzt wird, das mit polaren und/oder reaktiven Gruppen wie Säuren und Ester durch Pfropfung in der Schmelze in Gegenwart von thermisch zerfallenden Initiatoren mit radikalisch polymerisierbaren Monomeren modifiziert wurde,
wobei als Pfropfmonomere z.B. (Meth)acrylsäure, (Meth)acrylsäureester, Maleinsäureanhydrid, Itaconsäureanhydrid, Vinylacetat, Triethoxyvinylsilan geeignet sind.

5. Beschichtungsmaterial auf Basis nichtwäßriger, pastenartiger Polyolefin-Dispersionen nach einem oder mehreren der vorhergehenden Ansprüche, dadurch gekennzeichnet, daß die Fettsäurekomponente des Dispergierharzes b) in einer Menge von mindestens 10 Gew.-%, bezogen auf den Gesamtfettsäure-Gehalt, Stearinsäure enthält.

6. Beschichtungsmaterial auf Basis nichtwäßriger, pastenartiger Polyolefin-Dispersionen nach einem oder mehreren der vorhergehenden Ansprüche, dadurch gekennzeichnet, daß als Weichmacherkomponente c) Phthalate oder polymere Weichmacher eingesetzt werden.

7. Beschichtungsmaterial auf Basis nichtwäßriger, pastenartiger Polyolefin-Dispersionen nach einem oder mehreren der vorhergehenden Ansprüche, dadurch gekennzeichnet, daß es sich bei den Epoxidverbindungen d) um Polyglycidylether auf Basis von mehrwertigen, vorzugsweise zweiwertigen aliphatischen oder cycloaliphatischen Alkoholen, Phenolen oder Polyalkylenglycolen, um Polyglycidylester von Polycarbonsäuren, vorzugsweise von Dicarbonsäuren, oder um Addukte. die durch Anlagerung von Dicarbonsäuren oder difunktionellen Phenolen an Diepoxide erhalten werden, handelt.

8. Verfahren zur Herstellung eines Beschichtungsmaterials nach einem oder mehreren der vorhergehenden Ansprüche, gekennzeichnet durch folgende Verfahrensschritte:
1) Vermischen und Homogenisieren des fettsäuremodifizierten Alkydharzes b) mit einer Schmelze des Polyolefins a) in einer Mischeinrichtung bei einer Temperatur, die wenigstens 10 °C oberhalb des Schmelzbereiche von a) liegt,
2) Umwandlung dieser Mischung in eine feinteilige Dispersion der Komponente a) in der Komponente b) durch Abkühlung der Mischung unter fortwährendem intensivem Mischen auf eine Temperatur unterhalb des Schmelzbereiches von a),
3) Eintragen und homogenes Einarbeiten der Weichmachungsmittel c), der Epoxidverbindungen d) sowie gegebenenfalls der unter e) genannten Hilfs- und Zusatzstoffe, wobei die jeweiligen Komponenten einzeln oder, soweit sie untereinander mischbar sind, in Form eines Masterbatches hinzugefügt werden können.

9. Verfahren zur Herstellung eines Beschichtungsmaterials nach Anspruch 8, dadurch gekennzeichnet, daß im Verfahrensschritt 1) oder 2) der Weichmacher c) und/oder der Modifizierung der Komponenten a) und/oder b) dienende Verbindungen in die Mischung aus den Komponenten a) und b) eingearbeitet wird.

10. Verfahren zur Herstellung eines Beschichtungsmaterials nach Anspruch 8 und/oder 9, dadurch gekennzeichnet, daß die Zugabe der unter e) genannten Verbindungen ganz oder teilweise erst unmittelbar vor der Anwendung erfolgt.

## Claims

1. Non-aqueous, pasty polyolefin dispersion coating composition, characterised in that such coating composition contains
(a) a finely ground polyolefin;
(b) a fatty-acid modified alkyd resin with its acid number ranging from 6 to 50, and a fatty acid level ranging from 5 per cent to 60 per cent by weight, where the fatty acid component consists of 5 per cent to 60 per cent (by weight; based on total fatty acid level) of at least one saturated C12 - C18 fatty acid, and 0 per cent to 50 per cent, by weight, of monocarboxylic acids others than the aforementioned fatty acids;
(c) liquid, non-volatile plasticizers;
(d) hardening epoxy compounds with at least two epoxy groups contained in each molecule, and an epoxy equivalent weight of 160 - 180, acting as cross-linking agent, where epoxy groups from (d) and carboxylic groups from (b) are in an equivalent ratio of 0.9:1 to 1.5:1, based on the total dispersion system; and
(e) accelerators, reactive thinners, solvents as well as other additives and auxiliary agents, if necessary.

2. Non-aqueous, pasty polyolefin dispersion coating composition according to Claim (1) above, characterised in that the level of component (b) will range from 5 per cent to 100 per cent, by weight, based on polyolefin (a), and that the level of component (c) will be up to 75 per cent, by weight, based on component (b).

3. Non-aqueous, pasty polyolefin dispersion coating composition according to Claim (1) and / or Claim 2 above, characterised in that the polyolefin (a) can be low-density polyethylene (LDPE), medium-density polyethylene (MDPE) or high-density polyethylene (HDPE), or polypropylene, as well as copolymers of ethylene and propylene with one or more olefinic unsaturated monomers - including higher α-olefins (PE-LLD), acrylic acid and methacrylic acid as well as their derivates, olefinic unsaturated dicarboxylic acids or their derivates, vinyl esters or ethers - which all together may form copolymers with the aforementioned olefins.

4. Non-aqueous, pasty polyolefin dispersion coating composition according to one or more of the above Claims, characterised in that a polyolefin (a) is used that is modified by melt-grafting polar and / or reactive groups such as acids or esters in the presence of thermally instable initiators with free-radical polymerizing monomers, and where, for example, (meth)acrylic acid, esters of (meth)acrylic acid, maleic anhydride, itaconic anhydride, vinylacetate, triethoxyvinylsilane are suited to be used as grafting monomers.

5. Non-aqueous, pasty polyolefin dispersion coating composition according to one or more of the above Claims, characterised in that the fatty-acid component of the dispersing resin (b) contains at least 10 per cent stearic acid, by weight, based on total fatty acid content.

6. Non-aqueous, pasty polyolefin dispersion coating composition according to one or more of the above Claims, characterised in that phthalates or polymeric softeners are used as plasticizers(c).

7. Non-aqueous, pasty polyolefin dispersion coating composition according to one or more of the above Claims, characterised in that the epoxy compounds used (d) are either polyglycidyl ethers, based on multivalent - preferably bivalent - aliphatic or cycloaliphatic alcohols, phenols or polyalkyleneglycols, or polyglycidyl esters of polycarboxylic acids - preferably dicarboxylic acids - or adducts formed by dicarboxylic acids or bi-functional phenols in an addition reaction with diepoxies.

8. Process for the fabrication of coating composition according to one or more of the above Claims, characterised by the following process steps:
#1 Using a mixing appliance, fatty-acid modified alkyd resin (b) and melt of polyolefin (a) to be mixed to homogeneity at a temperature that is at least 10 °C above the melting range of (a).
#2 The above mix to be converted into a dispersion where component (a) is finely divided in component (b) by way of continuos, vigorous agitating while cooling down to a temperature lower than melting range of (a).
#3 Plasticizing agents (c), epoxy compounds (d), and additives and auxiliary agents (if any) as mentioned under (e) to be incorporated to homogeneity, whether as single components or in form of a master batch of the - miscible - components.

9. Process for the fabrication of coating composition according to Claim (8) above, characterised in that plasticizer (c) and / or compounds used for modifying components (a) and / or (b) are incorporated into the mix of components (a) and (b) during process steps #1 and #2.

10. Process for the fabrication of coating composition according to Claim (8) and / or Claim (9) above, characterised in that part of, or all, compounds mentioned under (e) are added right before application.

## Revendications

1. Revêtement à base de dispersions de polyoléfine pâteuse non-aqueuse, **caractérisé par le fait que** le revêtement comprend
a) une polyoléfine de fines particules,
b) une résine alkyde d'acide gras modifié en tant que résine de dispersion ayant un indice d'acidité allant de 6 à 50 et une teneur en acide gras allant de 5 à 60 % en poids, le composant en acide gras se composant, en ce qui concerne la teneur totale en acide gras, de 70 à 100 % en poids d'au moins un acide gras saturé C12 à C18 et de 0 à 30 % en poids d'acides monocarboxyliques différents des acides gras cités,
c) des plastifiants liquides et non-volatils,
d) des composés d'époxydes durcissables ayant au moins deux groupes d'époxydes par molécule et un poids équivalent en époxyde allant de 160 à 800 en tant que composants réticulants, le rapport d'équivalence des groupes d'époxydes de d) par rapport aux groupes carboxyles de b) allant dans la dispersion totale de 0,9:1 à 1,5:1 et
e) le cas échéant des accélérateurs de durcissement, des diluants réactifs, des dissolvants et d'autres adjuvants et agents auxiliaires.

2. Revêtement à base de dispersions de polyoléfine pâteuse non-aqueuse selon la revendication 1, **caractérisé par le fait que** la teneur en composant b) s'élève de 5 à 100 % en poids en ce qui concerne la polyoléfine a) et la teneur en composant c) s'élève jusqu'à 75 % en poids en ce qui concerne le composant b).

3. Revêtement à base de dispersions de polyoléfine pâteuse non-aqueuse selon la revendication 1 et/ou 2, **caractérisé par le fait que**, pour la polyoléfine a), il s'agit de polyéthylènes de faible densité (PE-LD), de densité moyenne (PE-MD) et de densité élevée (PE-HD), de polypropylènes ainsi que de copolymères d'éthylène et de propylène ayant un ou plusieurs monomères non-saturés à l'oléfine susceptibles de subir une copolymérisation avec ces oléfines et issus du groupe des oléfines supérieures α (PE-LLD), d'acide acrylique et d'acide méthacrylique et de ses dérivés, d'acides bicarbonés non-saturés à l'oléfine ou de leurs dérivés, d'esters ou d'éthers vinyliques.

4. Revêtement à base de dispersions de polyoléfine pâteuse non-aqueuse selon l'une ou plusieurs des revendications précédentes, **caractérisé par le fait qu'**une polyoléfine a) qui a été modifiée avec des groupements polaires et/ou réactifs tels que des acides et de l'éther en l'implantant dans la fonte en présence d'excitants se désagrégeant à la chaleur ayant des monomères susceptibles d'être polymérisés radicalement est employée,
l'acide (méth)acrylique, l'ester d'acide (méth)acrylique, l'anhydride d'acide maléique, l'anhydride d'acide itaconique, l'acétate de vinyle, le silane de triethoxyvinyl étant p. ex. appropriés en tant que monomères implantés.

5. Revêtement à base de dispersions de polyoléfine pâteuse non-aqueuse selon l'une ou plusieurs des revendications précédentes, **caractérisé par le fait que** le composant en acide gras de la résine de dispersion b) avec une quantité d'au moins 10 % en poids en ce qui concerne la teneur totale en acide gras contient de l'acide stéarique.

6. Revêtement à base de dispersions de polyoléfine pâteuse non-aqueuse selon l'une ou plusieurs des revendications précédentes, **caractérisé par le fait que** des phtalates ou des plastifiants polymères sont employés en composants plastifiants c).

7. Revêtement à base de dispersions de polyoléfine pâteuse non-aqueuse selon l'une ou plusieurs des revendications précédentes, **caractérisé par le fait que**, pour les composés d'époxydes d), il s'agit d'éthers polyglycidyliques à base de polyalcools, de préférence de dialcools, cyclo-aliphatiques ou aliphatiques, de phénols ou de glycols polyalkylènes, d'esters polyglycidyliques d'acides polycarbonés, de préférence d'acides bicarbonés, ou de produits d'addition obtenus par addition d'acides bicarbonés ou de phénols à deux fonctions à des diépoxydes.

8. Procédé destiné à fabriquer un revêtement selon l'une ou plusieurs des revendications précédentes, **caractérisé par** les étapes de procédé suivantes :
1) Mélange et homogénéisation de la résine alkyde d'acide gras modifié b) avec une fonte de polyoléfine a) dans un mélangeur à une température d'au moins 10°C au-dessus du domaine de fonte de a),
2) Transformation de ce mélange en une dispersion de fines particules du composant a) situé dans le composant b) en refroidissant le mélange en le mélangeant intensivement continuellement pour le porter à une température située en dessous du domaine de fonte de a),
3) Apport et brassage homogène des plastifiants c), des composés d'époxydes d) ainsi que, le cas échéant, des adjuvants et agents auxiliaires cités sous e), les composants respectifs pouvant être ajoutés un par un ou sous forme de mélange-maître tant qu'ils ne sont pas susceptibles de se mélanger entre eux.

9. Procédé destiné à fabriquer un revêtement selon la revendication 8, **caractérisé par le fait que**, dans l'étape de procédé 1) ou 2), le plastifiant c) et/ou des composés servant à la modification des composants a) et/ou b) sont apportés au mélange issu des composants a) et b).

10. Procédé destiné à fabriquer un revêtement selon la revendication 8 et/ou 9, **caractérisé par le fait que** le rajout des composés cités sous e) est entièrement ou partiellement effectué directement avant l'application.
